# EUROPÄISCHE PATENTANMELDUNG

(11) **EP 1 239 566 A1**
(43) Veröffentlichungstag der Anmeldung: **11.09.2002**
(21) Anmeldenummer: 01105842.7
(22) Anmeldetag: 09.03.2001
(51) Int. Cl.: H02H 7/04

(54) **Einrichtung für den Überspannungsschutz von Kernen von Stromwandlern**

(71) Anmelder: Leutron GmbH, 70771 Leinfelden - Echterdingen (DE)
(72) Erfinder: Alvarez, Angel, 8606 Greifensee (CH)
(74) Vertreter: Dittrich, Horst, Dr.

(57) **Zusammenfassung**

Die für den Überspannungsschutz von Kernen von Stromwandlern vorgesehene Einrichtung (1) enthält eine Trennfunkenstrecke (2) mit einer genau definierten Ansprechspannung. Parallel zur Trennfunkenstrecke (2) ist ein mit dieser thermisch gekoppelter erster Thermoschalter (3) angeordnet, welcher bei einer bestimmten ersten Temperatur der Trennfunkenstrecke (2) anspricht. Dadurch fliesst der durch Überspannung verursachte Strom bis zur Abkühlung der Trennfunkenstrecke (2) über den ersten Thermoschalter (3). Ausserdem enthält die Einrichtung (1) einen mit der Trennfunkenstrecke (2) thermisch gekoppelten zweiten Thermoschalter (4), welcher mit einer Anzeige und/oder einer Zentrale (12) verbunden ist.

## Beschreibung

Die vorliegende Erfindung betrifft eine Einrichtung für den Überspannungsschutz von Kernen von Stromwandlern.
In an das Hochspannungsnetz angeschlossenen Verteilstationen, denen beispielsweise eine Spannung von 72 kV zugeführt wird, müssen Strom- und Spannungswandler vorgesehen sein, welche die hohen Strom- und Spannungswerte auf eine mit üblichen Messgeräten messbare Grösse herunterwandeln. Dabei sind an die vom Hochspannungsnetz gespeiste Primärseite auf der Sekundärseite mehrere Wicklungen für verschiedene Zwecke angeschlossen, beispielsweise ein 5 A Stromwandler-Messkern für Strommessungen zum Zweck der Verrechnung an den Bezieher, und ein 1 A Stromwandler-Schutzkern zum Zweck der Überwachung, insbesondere auf Kurzschlüsse. Von den genannten Kernen führen Leitungen zu einer bis zu etwa 300 m entfernten Mess- und Steuerungswarte. Da die einzelnen Stromwandler nicht regelmässig kontrolliert werden, weiss man in der Mess- und Steuerungswarte nicht, ob und wann an den Stromwandlern irgendwelche Schäden auftreten.
Derartige Schäden treten immer dann auf, wenn ein Sekundärkreis irrtümlich geöffnet wird. Dann kommt es bei jedem Nulldurchgang der Wechselspannung zu einer Hochspannungsspitze von bis zu etwa 40 kV, welche zu Überschlägen und zur Zerstörung des Kerns führen kann. Man hat dieses Problem durch den Einbau von Luftfunkenstrecken zu lösen versucht. Da diese aber relativ ungenau und praktisch nicht auf eine exakte Durchschlagspannung einstellbar sind, und da ausserdem die Durchschlagspannung von Umgebungsparametern wie Luftdruck und Luftfeuchtigkeit abhängig ist, kann diese Lösung nicht befriedigen. Dabei muss man sich vor Augen halten, dass es beim Überspannungsschutz für die genannten Stromwandler nicht nur um die Sicherung von Sachwerten geht, sondern auch um die zuverlässige Sicherung von Leben und Gesundheit des Bedienungspersonals der Verteilstation. Man kann sich vorstellen, dass das Hantieren an einer mit einer Hochspannungsspitze von 40 kV beaufschlagten Klemme mit einem üblichen isolierten Schraubenzieher lebensgefährlich ist.
Durch die Erfindung soll nun eine Einrichtung für den Überspannungsschutz von Kernen von Stromwandlern angegeben werden, welche die Kerne und das Bedienungspersonal zuverlässig vor Schäden durch Überspannung schützt.

Diese Aufgabe wird erfindungsgemäss dadurch gelöst, dass eine Trennfunkenstrecke mit einer genau definierten Ansprechspannung vorgesehen und parallel zur Trennfunkenstrecke ein mit dieser thermisch gekoppelter erster Thermoschalter angeordnet ist, welcher bei einer bestimmten ersten Temperatur der Trennfunkenstrecke anspricht, so dass der durch Überspannung verursachte Strom bis zur Abkühlung der Trennfunkenstrecke über den ersten Thermoschalter fliesst.
Eine erste bevorzugte Ausführungsform der erfindungsgemässen Einrichtung ist dadurch gekennzeichnet, dass der erste Thermoschalter eine Durchschlagspannung aufweist, welche deutlich über der Impulsansprechspannung der Trennfunkenstrecke liegt.
Eine zweite bevorzugte Ausführungsform ist dadurch gekennzeichnet, dass bei Abkühlung der Trennfunkenstrecke auf eine unterhalb der ersten Temperatur liegenden zweite Temperatur der Thermoschalter geöffnet wird.
Sobald es am Stromwandler zum Auftreten von Überspannung kommt, erwärmt sich die Trennfunkenstrecke sehr rasch und erreicht beispielsweise bei 5 A- Ableitstrom nach einer Zeit von typischerweise etwa 1 Minute eine Temperatur von etwa 100°C bis 200°C. Wenn der Thermoschalter so ausgelegt ist, dass er bei etwa 85°C bis 95°C anspricht, wird er nach einer Zeit von unter einer Minute geschlossen und der Strom fliesst nicht mehr über die Trennfunkenstrecke sondern über den Thermoschalter. Während der Strom über den Thermoschalter fliesst, kühlt sich die Trennfunkenstrecke und damit auch der mit ihr thermisch gekoppelte Thermoschalter wieder ab und es wird verhindert, dass sich die Trennfunkenstrecke übermässig erhitzt. Bei Erreichen einer unterhalb der Ansprechtemperatur des Thermoschalters liegenden zweiten Temperatur der Trennfunkenstrecke wird der Thermoschalter geöffnet und der Strom fliesst wieder über die Trennfunkenstrecke, und so weiter, bis der Fehler behoben wird.
Eine dritte bevorzugte Ausführungsform der erfindungsgemässen Einrichtung ist dadurch gekennzeichnet, dass die genannte erste Temperatur in einem Bereich zwischen 85°C und 95°C liegt.
Eine vierte bevorzugte Ausführungsform der erfindungsgemässen Einrichtung ist dadurch gekennzeichnet, dass ein mit der Trennfunkenstrecke thermisch gekoppelter zweiter Thermoschalter vorgesehen ist, welcher mit einer Anzeige und/oder einer Zentrale verbunden ist.
Eine fünfte bevorzugte Ausführungsform der erfindungsgemässen Einrichtung ist dadurch gekennzeichnet, dass der zweite Thermoschalter das abwechselnde Ansprechen der Trennfunkenstrecke registriert und an die Anzeige und/oder die Zentrale weitermeldet.
Eine weitere bevorzugte Ausführungsform ist dadurch gekennzeichnet, dass der zweite Thermoschalter eine Einschalttemperatur zwischen 75°C und 85°C aufweist.

Der zweite Thermoschalter garantiert, dass das Auftreten von Überspannung in der Zentrale oder an einer anderen geeigneten Stelle möglichst rasch angezeigt und erkannt wird und dass die erforderlichen Reparaturmassnahmen urngehend eingeleitet werden.
Die Erfindung betrifft weiter einen Stromwandler mit sekundärseitig vorgesehenen Messund/oder Schutzkernen, welche über Leitungen mit einer Mess- und Steuerungszentrale verbunden sind, wobei die jeweiligen Leitungen zum Schutz vor Überspannungen über eine erste Trennfunkenstrecke verbunden sind.
Der erfindungsgemässe Stromwandler ist dadurch gekennzeichnet, dass parallel zu jeder ersten Trennfunkenstrecke ein mit dieser thermisch gekoppelter erster Thermoschalter angeordnet ist, welcher bei einer bestimmten ersten Temperatur der ersten Trennfunkenstrecke anspricht, so dass der durch Überspannung verursachte Strom bis zur Abkühlung der ersten Trennfunkenstrecke über den ersten Thermoschalter fliesst.
Im folgenden wird die Erfindung anhand eines Ausführungsbeispiels und der Zeichnungen beispielsweise näher erläutert; es zeigt:
Fig. 1 ein Schaltschema einer erfindungsgemässen Einrichtung; und
Fig. 2 ein Schema eines mit erfindungsmässen Einrichtungen ausgerüsteten Stromwandlers.

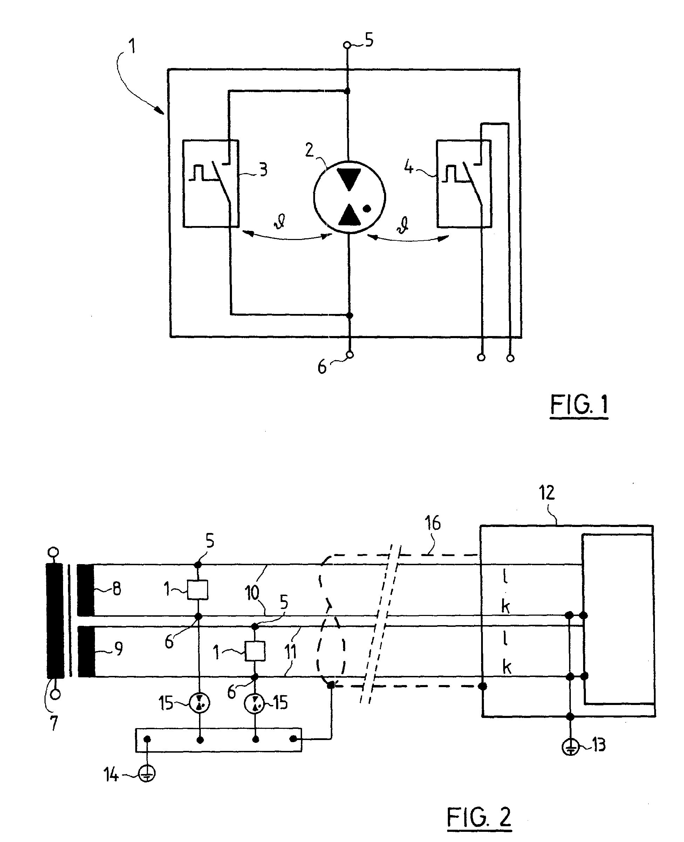

Fig. 1 zeigt eine Überspannungs-Schutzeinrichtung 1 für den Schutz von Kernen von Stromwandlern gegen das Auftreten von Überspannungen, verursacht durch sekundärseitige Stromkreisunterbrechungen der Stromwandler. Bei derartigen sekundärseitigen Stromkreisunterbrechungen kommt es bei jedem Nulldurchgang der Wechselspannung zu einer Hochspannungsspitze von bis zu etwa 40 kV. Diese Überspannungen werden durch die Schutzeinrichtung 1 auf ein ungefährliches Niveau begrenzt.
Darstellungsgemäss besteht die Schutzeinrichtung 1 aus einer Trennfunkenstrecke 2, einem ersten mit der Trennfunkenstrecke 1 thermisch gekoppelten und parallel zu dieser angeordneten Thermoschalter 3 und einem zweiten ebenfalls mit der Trennfunkenstrecke 1 thermisch gekoppelten Thermoschalter 4. Die thermische Kopplung zwischen der Trennfunkenstrecke 2 und dem ersten und zweiten Thermoschalter 3 bzw. 4 ist durch mit dem griechischen Buchstaben Theta bezeichnete Pfeile symbolisiert. Die Trennfunkenstrecke 2 weist zwei Anschlüsse 5 und 6 zum Anschluss an einen Stromwandler auf (siehe dazu Fig. 2); sie ist gasgefüllt und hermetisch abgeschlossen und mit Komponenten aus hochwertigen Werkstoffen, wie beispielsweise Keramik, hergestellt. Der erste Thermoschalter 3 weist eine Durchschlagspannung auf, die deutlich über der Impulsansprechspannung der Trennfunkenstrecke 2 liegt. Dadurch ist sicher gestellt, dass über den ersten Thermoschalter 3 keine Überschläge stattfinden.
Sobald am Stromwandler Überspannungen auftreten, erwärmt sich die Trennfunkenstrecke 2 sehr rasch und erreicht, beispielsweise bei 5 A- Ableitstrom, nach weniger als einer Minute eine Temperatur von etwa 100° C. Über die Thermokopplung erwärmt sich auch der erste Thermoschalter 3 und schaltet sich bei einer vorgegebenen Temperatur von beispielsweise 85° C ein. Dadurch wird der Thermoschalter 3 kurz geschlossen, so dass der Strom nicht mehr über die Trennfunkenstrecke 2 sondern über den Thermoschalter 3 fliest. Dadurch kühlt sich die Trennfunkenstrecke 2 ab; bei Erreichen einer unterhalb der Ansprechtemperatur des ersten Thermoschalters 3 liegenden Temperatur wird der Thermoschalter 3 geöffnet und der Strom fliesst wieder über die Trennfunkenstrecke 2.
Da dass abwechselnde Ansprechen von Trennfunkenstrecke 2 und erstem Thermoschalter 3 durch eine Störung bedingt ist, beispielsweise durch einen offenen Sekundärkreis, muss diese Störung möglichst rasch behoben werden. Voraussetzung dafür ist eine Anzeige der Störung in einer Zentrale oder an einer anderen geeigneten Stelle, um das Bedienungspersonal von der Störung in Kenntnis zu setzen. Dazu dient der zweite Thermoschalter 4. Dieser ist so wie der erste Thermoschalter 3 mit der Trennfunkenstrecke 2 thermisch gekoppelt, weist aber keine elektrische Verbindung zu dieser auf. Der zweite Thermoschalter 4 hat eine tiefere erste Ansprechtemperatur als der erste Thermoschalter 3, so dass er sicher signalisiert, wann der erste Thermoschalter 3 geschlossen ist. Der zweite Thermoschalter 4 dient als Fernmeldekontakt und weist zwei Anschlüsse zu einer Verbindung zu einer geeigneten Anzeige, beispielsweise einer Zentrale auf. Auf der Anzeige wird der jeweilige Schaltzustand des zweiten Thermoschalters 4 angezeigt und es ist jederzeit ersichtlich, ob eine Störung vorliegt.
Das in Fig. 2 dargestellt Schema zeigt einen Stromwandler mit zwei Kernen. Die Primärwicklung 7 ist an eine Hochspannung von beispielsweise 24 kV angeschlossen; die Sekundärseite besteht aus zwei Kernen, darstellungsgemäss einem Messkern 8 und einem sogenannten Schutzkern 9, welche beide über Leitungspaare 10, 11 mit einer Mess- und Steuerungswarte oder Zentrale 12 verbunden sind. Der Messkern 8 dient für die Strommessung zum Zweck der Verrechnung an die Abonnenten, und der Schutzkern 9 dient zum Zweck der Überwachung auf beispielsweise Kurzschlüsse, damit Folgeschäden vermieden werden können und eine sichere Stromversorgung gewährleistet ist. Zwischen den beiden Leitungen l und k jedes Leitungspaares 10, 11 ist jeweils eine Schutzeinrichtung 1 gemäss Fig. 1 angeordnet. Jede Leitung k ist nur in der Zentrale 12 geerdet, die Kabelabschirmung an beiden Enden.
Die Trennfunkenstrecken 15, welche ebenfalls gasgefüllt und hermetisch abgeschlossen sind, verbinden während des Auftretens von Überspannungen, die beispielsweise durch Blitze oder durch Schalthandlungen im Netz verursacht werden, Anlageteile welche normalerweise voneinander getrennt sein müssen. Die Trennfunkenstrecken 15 finden sowohl in Strom- als auch in Spannungswandlern Verwendung.

## Patentansprüche

1. Einrichtung für den Überspannungsschutz von Kernen von Stromwandlern, **dadurch gekennzeichnet, dass** eine Trennfunkenstrecke (2) mit einer genau definierten Ansprechspannung vorgesehen und parallel zur Trennfunkenstrecke (2) ein mit dieser thermisch gekoppelter erster Thermoschalter (3) angeordnet ist, welcher bei einer bestimmten ersten Temperatur der Trennfunkenstrecke (2) anspricht, so dass der durch Überspannung verursachte Strom bis zur Abkühlung der Trennfunkenstrecke (2) über den ersten Thermoschalter (3) fliesst.

2. Einrichtung nach Anspruch 1, **dadurch gekennzeichnet, dass** der erste Thermoschalter (3) eine Durchschlagspannung aufweist, welche deutlich über der Impulsansprechspannung der Trennfunkenstrecke (2) liegt.

3. Einrichtung nach Anspruch 2, **dadurch gekennzeichnet, dass** bei Abkühlung der Trennfunkenstrecke (2) auf eine unterhalb der ersten Temperatur liegenden zweite Temperatur der erste Thermoschalter (3) geöffnet wird.

4. Einrichtung nach Anspruch 3, **dadurch gekennzeichnet, dass** die genannte erste Temperatur in einem Bereich zwischen 85°C und 95°C liegt.

5. Einrichtung nach einem der Ansprüche 1 bis 4, **dadurch gekennzeichnet, dass** ein mit der Trennfunkenstrecke (2) thermisch gekoppelter zweiter Thermoschalter (4) vorgesehen ist, welcher mit einer Anzeige und/oder einer Zentrale (12) verbunden ist.

6. Einrichtung nach Anspruch 5, **dadurch gekennzeichnet, dass** der zweite Thermoschalter (4) das abwechselnde Ansprechen der Trennfunkenstrecke registriert und an die Anzeige und/oder Zentrale (12) weitermeldet.

7. Einrichtung nach Anspruch 6, **dadurch gekennzeichnet, dass** der zweite Thermoschalter (4) eine Einschalttemperatur zwischen 75°C und 85°C aufweist.

8. Einrichtung nach einem der Ansprüche 1 bis 7, **dadurch gekennzeichnet, dass** die Trennfunkenstrecke (2) in einem gasgefüllten und hermetisch abgeschlossenen Gehäuse angeordnet ist.

9. Stromwandler mit sekundärseitig vorgesehenen Mess- und/oder Schutzkernen, (5 bzw. 8) welche über Leitungen (10 bzw. 11) mit einer Mess- und Steuerungszentrale (12) verbunden sind, **dadurch gekennzeichnet**, die jeweiligen Leitungen (10, 11) zum Schutz vor Überspannungen über eine erste Trennfunkenstrecke (2) mit genau definierter Ansprechspannung verbunden sind, dass parallel zu jeder ersten Trennfunkenstrecke (2) ein mit dieser thermisch gekoppelter erster Thermoschalter (3) angeordnet ist, welcher bei einer bestimmten ersten Temperatur der ersten Trennfunkenstrecke (2) anspricht, so dass der durch Überspannung verursachte Strom bis zur Abkühlung der ersten Trennfunkenstrecke (2) über den ersten Thermoschalter (3) fliesst.

10. Stromwandler nach Anspruch 9, **dadurch gekennzeichnet, dass** ein mit jeder ersten Trennfunkenstrecke (2) thermisch gekoppelter zweiter Thermoschalter (4) vorgesehen ist, welcher mit der Mess- und Steuerungszentrale (12) verbunden ist.

11. Stromwandler nach Anspruch 10, **dadurch gekennzeichnet, dass** die Leitungen (10, 11) jedes Kerns (8 bzw. 9) einerseits direkt mit einer ersten Erdung (13) und anderseits über eine zweite Trennfunkenstrecke (15) mit einer zweiten Erdung (14) verbunden sind, wobei die genannten zweiten Trennfunkenstrecken (15) bei Überspannungen Erdungen (13, 14) miteinander verbinden, welche normalerweise voneinander getrennt sein müssen.
